# EUROPÄISCHE PATENTSCHRIFT

(11) **EP 2 337 740 B1**
(45) Veröffentlichungstag und Bekanntmachung des Hinweises auf die Patenterteilung: **02.09.2015**
(21) Anmeldenummer: 09736112.5
(22) Anmeldetag: 03.09.2009
(51) Int. Cl.: B64D 17/80, B64D 17/38, F42B 10/56, F16B 31/00

(54) **FLUGKÖRPER MIT ZUMINDEST EINEM BREMSFALLSCHIRM SOWIE BEFESTIGUNGSVORRICHTUNG ZUR BEFESTIGUNG EINES BREMSFALLSCHIRMS AN EINEM FLUGKÖRPER**
FLYING OBJECT COMPRISING AT LEAST ONE BRAKE PARACHUTE AND FIXING DEVICE FOR FIXING A BRAKE PARACHUTE TO A FLYING OBJECT
ENGIN POURVU D'AU MOINS UN PARACHUTE STABILISATEUR ET DISPOSITIF DE FIXATION PERMETTANT DE FIXER UN PARACHUTE STABILISATEUR À UN ENGIN

(30) Priorität: 20.09.2008 DE 102008048129
(43) Veröffentlichungstag der Anmeldung: 29.06.2011
(73) Patentinhaber: MBDA Deutschland GmbH, 86529 Schrobenhausen (DE)
(72) Erfinder: FASOL, Dieter, 82024 Taufkirchen (DE); GRABMEIER, Michael, 83022 Rosenheim (DE)
(74) Vertreter: Avenhaus, Beate
(86) Internationale Anmeldenummer: PCT/DE2009/001240
(87) Internationale Veröffentlichungsnummer: WO 2010/031377

(56) Entgegenhaltungen:
- EP-A1- 0 609 565
- DE-B- 1 086 134
- FR-A1- 2 772 340
- GB-A- 867 419
- US-A- 2 680 577
- US-A- 3 829 146
- US-A- 5 245 738

## Beschreibung

### TECHNISCHES GEBIET

Die vorliegende Erfindung betrifft einen Flugkörper mit zumindest einem Bremsfallschirm gemäß dem Oberbegriff des Patentanspruchs 1.

Sollen während des Fluges von einem Trägerluftfahrzeug Lasten oder unbemannte Flugkörper separiert werden, so erfolgt dies häufig mittels an der Last beziehungsweise am unbemannten Flugkörper angebrachten Bremsfallschirmen, die plötzlich dem das Trägerluftfahrzeug anströmenden Wind ausgesetzt werden und daraufhin eine Zugkraft auf die zu separierende Last beziehungsweise den zu separierenden unbemannten Flugkörper ausüben. Nach der Separation vom Trägerluftfahrzeug wird auch eine separierte Last zu einem Flugkörper, so dass hier allgemein von Flugkörpern gesprochen wird. Auch Lasten, die beispielsweise bei einem so genannten Airdrop von einem Trägerluftfahrzeug separiert werden, werden in der Terminologie dieser Patentanmeldung als Flugkörper bezeichnet, auch wenn es sich bei diesen Lasten beispielsweise um Landfahrzeuge, Container oder beladene Paletten handelt.

Aus der DE 103 42 565 A1 ist es beispielsweise bekannt, mittels eines an einem Zugseil befestigten Bremsfallschirms einen Marschflugkörper aus dem Laderaum eines Transportflugzeugs durch eine geöffnete Heckklappe herauszuziehen. Dabei ist die Zugleine des Bremsfallschirms an einem Airdrop-Pylon befestigt, der an der Oberseite des Marschflugkörpers lösbar angebracht ist und der in einem Schienensystem im Laderaum des Trägerluftfahrzeugs in Luftfahrzeuglängsrichtung verschiebbar gelagert ist. Hierdurch wird gewährleistet, dass der Marschflugkörper an dem schienengeführten Pylon hängend zuverlässig aus dem Laderaum des Trägerluftfahrzeugs herausgezogen werden kann.

Aus der DE 103 38 963 A1 ist es bekannt, einen in einer Ausziehplattform hängend gelagerten Marschflugkörper mittels eines an der Oberseite der Ausziehplattform befestigten Bremsfallschirms durch eine geöffnete Heckklappe eines Trägerluftfahrzeugs aus dessen Laderaum herauszuziehen. Die Ausziehplattform ist dabei auf im Frachtraumboden des Trägerluftfahrzeugs vorgesehenen Transportrollen gelagert und kann so aus dem Frachtraum herausgezogen werden.

Eine ähnliche Vorrichtung ist beispielsweise auch aus der DE 10 2006 001 189 A1 bekannt, wobei auch hier die Zugleine des Bremsfallschirms an der Oberseite der rahmenförmigen Ausziehplattform befestigt ist. Der Marschflugkörper ist am oberen Teil der rahmenförmigen Ausziehplattform hängend lösbar gelagert.

Bei allen drei aus dem Stand der Technik bekannten Einrichtungen zum Herausziehen eines Flugkörpers aus dem Frachtraum eines Trägerluftfahrzeugs mittels eines Bremsfallschirms wirkt die vom Bremsfallschirm auf den Flugkörper ausgeübte Zugkraft an der Oberseite der jeweils herauszuziehenden Last und somit asymmetrisch bezüglich des Querschnitts der mit dem Marschflugkörper versehenen Last. Dies führt dazu, dass im Moment des Heraustretens der Last aus dem Frachtraum des Trägerluftfahrzeugs, also dann wenn die Last nicht mehr innerhalb des Trägerluftfahrzeugs geführt ist, durch die Zugkraft des Bremsfallschirms ein Moment auf die dann zum Flugkörper gewordene Last ausgeübt wird, die zu einer Veränderung des Anstellwinkels des Flugkörpers im Wind führt. Diese Anstellwinkelveränderung bewirkt wiederum, dass die auf den Flugkörper auftreffende Luftströmung eine Verstärkung der Veränderung des Anstellwinkels herbeiführt, wodurch der gesamte Flugkörper in einen instabilen Flugzustand geraten kann, der auch nach dem Trennen des Bremsfallschirms vom Flugkörper nicht mehr korrigierbar ist. Der Flugkörper kann auf diese Weise verloren gehen.

Die EP 0 609 565 A1 betrifft einen zweistufigen Flugkörper, bei welchem die zweite Stufe durch einen Fallschirm von der Zündung abgebremst wird. Dazu ist das Triebwerk der zweiten Stufe an seinem Auslass mit einem Deckel versehen, der auf den Düsenauslass dieses Triebwerks aufgesteckt ist und dort unter Reibschluss festgehalten wird. Der Auslassbereich der Düse dieses Triebwerks ist von einem am Flugkörperrumpf befestigten Spannring umgeben, dessen auslassseitiges Ende wiederum von einem Deckel verschlossen ist. Dieser Deckel ist mit einer ringförmigen Wandung versehen, die einen sich auf der Innenseite von der Auslassrichtung weg verjüngenden Querschnitt aufweist. Im geschlossenen Zustand des ersten Deckels wird der Spannring radial nach außen vorgespannt, wobei ein ringförmiger Umfangssteg am auslassseitigen Ende des Spannrings den verjüngten Bereich des Rasterdeckels hintergreift, sodass dieser in Form einer Formschlussverbindung am Spannring und in der Folge am Rumpf des Flugkörpers festgehalten ist. In der Stirnwand des Rasterdeckels sind eine Mehrzahl von Halteleinen verankert, die gemeinsam in eine Zugleine eines Bremsfallschirms übergehen, sodass die Zugkraft des Bremsfallschirms über die Zugleine und die Halteleinen gleichmäßig auf den Rasterdeckel und damit auf den Flugkörper einwirkt. Eine Trennung des Bremsfallschirms vom Flugkörper erfolgt dadurch, dass bei Aufbau eines Drucks im Triebwerk der zweiten Stufe der innere Deckel vom Triebwerksauslass abgesprengt wird, wodurch der Spannring seine radial auswärts gerichtete Vorspannkraft verliert, sodass daraufhin der Rasterdeckel aufgrund der Zugkraft des Bremsfallschirms vom auslassseitigen Ende des Spannrings abgezogen werden kann. Bei dieser Ausführung ist nicht gewährleistet, dass das Lösen des Rasterdeckels vom Spannring über den Umfang gleichmäßig erfolgt. Es ist daher nicht auszuschließen, dass durch eine ungleichmäßige Lösung des Rasterdeckels vom Spannring ein Moment auf den Flugkörper aufgebracht wird, das diesen impulsartig aus der bisherigen Flugbahn auslenkt.

Die FR 2 772 340 A1 offenbart ein Fallschirmsystem für Helikopter, bei welchem einer oder mehrere Fallschirme an einer Halterung am oberen Ende des Rotordoms vorgesehen sind. Mittels diesen Fallschirms beziehungsweise dieser Fallschirme soll ein Helikopter nach einem Rotorausfall sicher zu Boden schweben. Es besteht daher kein Anlass, hierbei eine automatische Trennvorrichtung für den Fallschirm vorzusehen und folglich ist eine solche in dieser Druckschrift auch nicht offenbart.

Die US 3,829,146 A offenbart eine Trennvorrichtung für einen Fallschirm mit einer Kolben-Zylinder-Einheit, bei der der Kolben in einem Hydraulikfluid im Zylinder läuft und eine Halteleine für den Fallschirm freigibt, wenn der Kolben in seiner Endposition angekommen ist und so den Fallschirm von dem mit dem Zylinder verbundenem Objekt löst.

Die DE 10 86 134 B und die GB 867 419 A offenbaren eine Kupplung für Fall- und Bremsschirme mit einer Federn aufweisenden Verriegelungsmechanik, bei der die Trennung der beiden Teile voneinander durch bleibende Verformung eines mechanischen Elements losgelöst wird.

Die US 5,245,738 A betrifft ein Verfahren zur Sicherung und nichtexplosiven Trennung mehrerer Komponenten. Dabei sind elektrisch beheizbare Schmelzelemente vorgesehen, die zwei zu trennende Teile einer Befestigung miteinander verbinden und die unter Einwirkung eines elektrischen Stroms schmelzen und die beiden Teile relativ zueinander freigeben.

Aufgabe der vorliegenden Erfindung ist es daher, einen Flugkörper mit zumindest einem Bremsfallschirm gemäß dem Oberbegriff des Patentanspruchs 1 anzugeben, bei welchem das Risiko minimiert ist, dass der Flugkörper nach dem Verlassen des Trägerluftfahrzeugs in einen instabilen Flugzustand gerät.

Diese Aufgabe wird durch den Flugkörper mit den Merkmalen des Patentanspruchs 1 gelöst.

Dabei ist der Flugkörper mit einer Mehrzahl von Befestigungsvorrichtungen für den Bremsfallschirm versehen und zwischen den Befestigungsvorrichtungen und dem

Bremsfallschirm ist eine Zugleine vorgesehen. Die Bremsvorrichtungen sind derart am Flugkörper angebracht, dass eine im entfaltenden Zustand des von Luft angeströmten Bremsfallschirms von der Zugleine gebildete gerade Linie in ihrer gedachten Verlängerung durch den Schwerpunkt des Flugkörpers verläuft. Die Zugleine ist an ihrem zum Flugkörper weisenden vorderen Ende mit einer Mehrzahl von Verbindungsleinen versehen ist, die jeweils zu einer Befestigungsvorrichtung führen. Hier ist die Anordnung der mehreren Bremsvorrichtungen am Flugkörper derart, dass die auf den Schwerpunkt des Flugkörpers wirkende Resultierende der an den einzelnen Befestigungsvorrichtungen angreifenden Zugkräfte der gedachten Verlängerung der von der Zugleine gebildeten geraden Linie entspricht.

Die erfindungsgemäße geometrische Bedingung, bei der die Wirklinie der Zugkraft des Bremsfallschirms durch den Schwerpunkt des vom Bremsfallschirm gezogenen Flugkörpers verläuft, sorgt für eine momentenfreie Krafteinleitung der Zugkraft in den Flugkörper. Der erfindungsgemäße Flugkörper weist somit eine momentenfreie Befestigung des Bremsfallschirms am Flugkörper auf. Die Zugkraft des Bremsfallschirms wirkt somit momentenfrei auf den Flugkörper ein.

Die jeweilige Befestigungsvorrichtung weist einen Auslösemechanismus zum zeitsynchronenTrennen der mechanischen Verbindung zwischen dem Flugkörper und dem Bremsfallschirm auf. Die Trennung des Bremsfallschirms vom Flugkörper erfolgt dann momentenfrei, weil die Trennung der jeweiligen Verbindungsleine in der jeweiligen Befestigungsvorrichtung zeitsynchron erfolgt. Die Trennung des Bremsfallschirms vom Flugkörper erfolgt auch dann momentenfrei, wenn sie im Bereich der Zugleine erfolgt.

Vorzugsweise weist die Befestigungsvorrichtung einen mit dem Flugkörper verbindbaren Befestigungskörper sowie einen im Befestigungskörper gehalterten und mit der Zugleine verbindbaren Zuganker auf. Der Zuganker kann dabei entweder unmittelbar oder mittelbar über eine Verbindungsleine mit der Zugleine verbunden sein.

Vorteilhaft ist es, wenn der Zuganker im Befestigungskörper mittels einer trennbaren Einrichtung gehaltert ist. Diese Ausführungsform gestattet es, eine definierte Trennung zwischen Flugkörper und Bremsfallschirm innerhalb der Befestigungsvorrichtung vorzunehmen.

Die trennbare Einrichtung kann in einer bevorzugten Ausführungsform zumindest ein thermisch schmelzbares Befestigungselement sowie ein Wärmeerzeugungselement aufweisen. Erreicht das Wärmeerzeugungselement, das in unmittelbarer Nähe des thermisch schmelzbaren Befestigungselements angeordnet ist, die Schmelztemperatur des Befestigungselements, so wird dieses aufgeschmolzen und der Zuganker wird vom Befestigungskörper mechanisch getrennt. Er kann daraufhin von der Zugkraft des Bremsfallschirms aus dem Befestigungskörper herausgezogen werden, wobei der leere Befestigungskörper am Flugkörper verbleibt. Das Befestigungselement kann auch auf andere Weise, zum Beispiel chemisch, schmelzbar ausgebildet sein, wobei statt des Wärmeerzeugungselements ein entsprechendes Schmelzelement vorgesehen ist.

Alternativ kann die trennbare Einrichtung zumindest ein mechanisch zerstörbares Befestigungselement sowie ein vorzugsweise in unmittelbarer Nähe davon befindliches Zerstörungselement für dieses Befestigungselement aufweisen. Das Zerstörungselement, das beispielsweise von einem federbeaufschlagten Schlagbolzen oder einer Sprengkapsel gebildet sein kann, zerstört das Befestigungselement und trennt somit den Zuganker vom Befestigungskörper, so dass der Zuganker von der Zugkraft des Bremsfallschirms aus dem Befestigungskörper herausgezogen werden kann.

In einer besonders bevorzugten Ausführungsform weist der Auslösemechanismus eine Zeitverzögerungseinrichtung auf, die von der auf den Zuganker einwirkenden Zugkraft ausgelöst wird und die ihrerseits zeitverzögert die Trennung der trennbaren Einrichtung auslöst. Auf diese Weise kann die Trennung nach Ablauf eines vorgebbaren Zeitintervalls nach dem Zeitpunkt des erstmaligen Einwirkens der vom Bremsfallschirm ausgeübten Zugkraft auf den Flugkörper ausgelöst werden.

Die Zeitverzögerungseinrichtung wird dabei von einer vorzugsweise mechanischen Uhr gebildet. Ein mechanisches Uhrwerk besitzt den Vorteil, dass keine zusätzliche elektrische Spannungsversorgung für den Auslösemechanismus am Flugkörper vorgesehen werden muss. Eine derart ausgestaltete Befestigungsvorrichtung kann somit an jeden Flugkörper, auch an Flugkörpern ohne eigene oder ohne aktive elektrische Spannungsversorgung angebracht werden, wie dies beispielsweise häufig bei Airdrop-Lasten der Fall ist.

In einer weiteren vorteilhaften Ausgestaltung ist eine Mehrzahl von Bremsfallschirmen vorgesehen, die jeweils mit dem vom Flugkörper wegweisenden hinteren Ende der Zugleine verbunden sind. Auch bei dieser Ausführungsform ist durch die allen Bremsfallschirmen gemeinsame Zugleine eine momentenfreie Befestigung der Bremsfallschirme am Flugkörper gewährleistet.

Eine Befestigungsvorrichtung zur Befestigung von zumindest einem Bremsfallschirm an einem Flugkörper weist einen Befestigungskörper zur Anbringung der Befestigungsvorrichtung am Flugkörper sowie einen im Befestigungskörper gehalterten und mit einem Zugseil des Flugkörpers zu verbindenden Zuganker auf.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Darstellung eines erfindungsgemäßen Flugkörpers mit einem Bremsfallschirm, bei welchem der Bremsfallschirm mittels einer Befestigungsvorrichtung am Flugkörper angebracht ist;
- Fig. 2: eine schematische Darstellung eines erfindungsgemäßen Flugkörpers mit einem Bremsfallschirm, bei dem der Bremsfallschirm mittels mehrerer Befestigungsvorrichtungen am Flugkörper angebracht ist;
- Fig. 3: eine erfindungsgemäße Befestigungsvorrichtung für einen Bremsfallschirm an einem Flugkörper in schematischer Darstellung vor dem Einwirken der Zugkraft des Bremsfallschirms und
- Fig. 4: eine erfindungsgemäße Befestigungsvorrichtung für einen Bremsfallschirm an einem Flugkörper in schematischer Darstellung nach dem Einwirken der Zugkraft des Bremsfallschirms.

### DARSTELLUNG VON BEVORZUGTEN AUSFÜHRUNGSBEISPIELEN

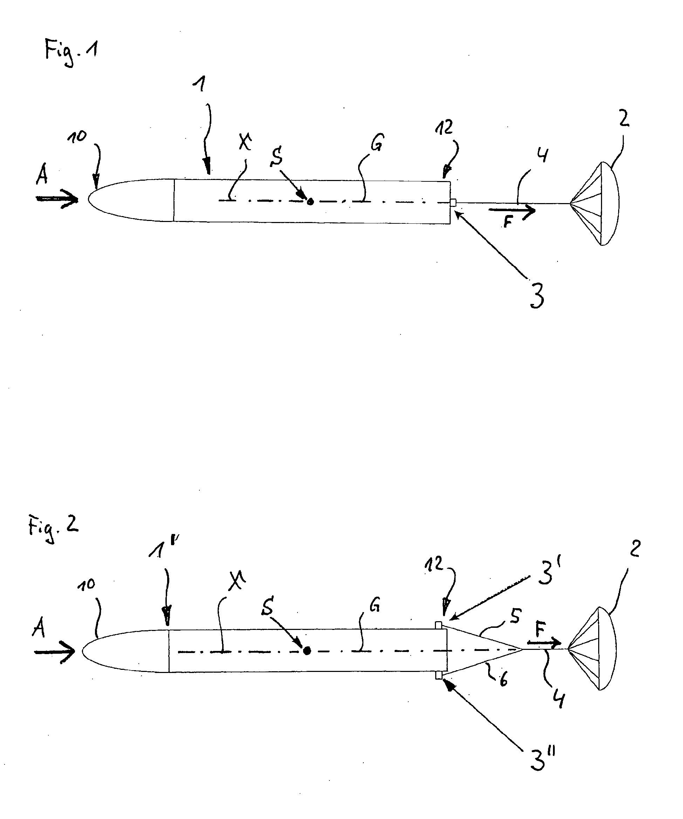

In Fig. 1 ist ein Flugkörper 1 dargestellt, der an seiner Vorderseite 10 von durch einen Pfeil A symbolisierte Luft angeströmt wird. Am Heck 12 des Flugkörpers 1 ist mittels einer am Flugkörper 1 angebrachten Befestigungsvorrichtung 3 eine Zugleine 4 eines Bremsfallschirms 2 angebracht. Der geöffnete Bremsfallschirm 2 hält die Zugleine 4 unter Spannung und überträgt eine Bremskraft F über die Befestigungsvorrichtung 3 auf den Flugkörper 1.

Die gespannte Zugleine 4 bildet eine gerade Linie, deren gedachte Verlängerung G durch den Schwerpunkt S (Masseschwerpunkt) des Flugkörpers 1 verläuft. Die Befestigungsvorrichtung 3 ist somit derart am Flugkörper 1 angebracht, dass die von der Zugleine 4 gebildete gerade Linie in ihrer gedachten Verlängerung G durch den Schwerpunkt S des Flugkörpers 1 verlaufen kann. In Fig. 1 entspricht die Linie G der Flugkörperlängsachse X.

Fig. 2 zeigt eine alternative Ausgestaltung, die bis auf die Befestigung des Bremsfallschirms der Ausführung des Flugkörpers in Fig. 1 entspricht. Abweichend von der Ausführung gemäß Fig. 1 weist der Flugkörper 1' mehrere Befestigungsvorrichtungen 3', 3" auf, wobei in Fig. 2 zwei Befestigungsvorrichtungen, eine an der Oberseite und eine an der Unterseite des Hecks 12 des Flugkörpers dargestellt sind. Es können aber auch drei, vier oder mehr Befestigungsvorrichtungen vorgesehen sein.

Von jeder der Befestigungsvorrichtungen 3', 3" verläuft eine Verbindungsleine 5, 6, zu einem vorderen, zum Flugkörper 1 weisenden Ende der Zugleine 4. Die Verbindungsleinen 5, 6 sind auf die gleiche Weise wie die Zugleine 4 bei der Ausführungsform nach Fig. 1 mit der zugeordneten Befestigungsvorrichtung 3', 3" verbunden. Die Zugleine 4 ist bei der Ausführungsform nach Fig. 2 somit nicht unmittelbar, sondern mittelbar über die Verbindungsleine 5, 6 mit dem Flugkörper 1' verbunden.

Auch die mehreren Befestigungsvorrichtungen 3', 3" sind derart am Flugkörper 1' angebracht, dass die von der Zugleine 4 gebildete gerade Linie in ihrer gedachten Verlängerung G durch den Schwerpunkt S des Flugkörpers 1' verläuft.

An Stelle von einem einzigen Bremsfallschirm 2 können auch mehrere Bremsfallschirme vorgesehen sein, die jeweils mit dem vom Flugkörper 1 wegweisenden hinteren Ende der Zugleine 4 verbunden sind.

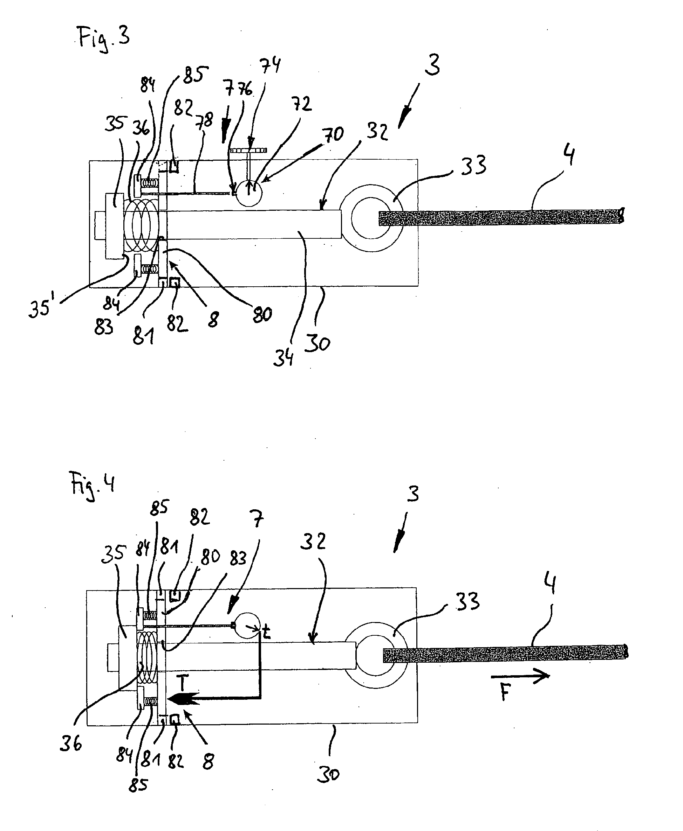

Nachfolgend wird anhand der Figuren 3 und 4 der Aufbau der Befestigungsvorrichtung 3 beschrieben. Die Befestigungsvorrichtungen 3' und 3" sind in derselben Weise aufgebaut.

Figur 3 ist eine schematische Darstellung einer Befestigungsvorrichtung 3, wie sie Teil des mit einem Bremsfallschirm versehenen Flugkörpers gemäß der Erfindung ist und wie sie selbst ebenfalls Gegenstand der Erfindung ist. Die Befestigungsvorrichtung 3 weist einen Befestigungskörper 30 auf, der beispielsweise als ein an der Rückseite bezüglich der Flugrichtung des Flugkörpers (in den Figuren 3 und 4 rechts) offenes Gehäuse ausgebildet ist. Im Befestigungskörper 30 ist ein Zuganker 32 gehaltert, der an seinem rückwärtigen Ende mit einer Öse 33 versehen ist. An der Öse 33 ist die Zugleine 4 des Bremsfallschirms 2 befestigt, die beispielsweise als Zugseil ausgebildet ist.

Der Zuganker 32 ist innerhalb des Befestigungskörpers 30 in Axialrichtung des Zugankers, die beispielsweise parallel zur Längsachse X des Flugkörpers 1 verläuft, verschiebbar gelagert. Dazu ist im Befestigungskörper 30 eine vom Befestigungskörper 30 trennbare Einrichtung 8 vorgesehen. Diese trennbare Einrichtung 8 weist ein Rückhalteelement 80 auf, das über in den Figuren 3 und 4 nur schematisch dargestellte thermisch schmelzbare Befestigungselemente 81 mit dem Befestigungskörper 30 mechanisch verbunden ist. In unmittelbarer Nähe des jeweiligen thermisch schmelzbaren Befestigungselements 81 ist ein diesem jeweils zugeordnetes Wärmeerzeugungselement 82 vorgesehen.

Das Rückhaltelement 80, das auf die vorbeschriebene Weise mit dem Befestigungskörper 30 verbunden ist, weist eine zentrale Öffnung 83 auf, durch die der Zuganker 32 von hinten nach vorne hindurchtritt. Im Bereich seines vorderen, von der Öse 33 abgewanden Endes ist der Zuganker 32 mit einem sich radial über den Umfang des Schaftes 34 des Zugankers 32 hinaus erstreckenden Schulteransatz 35 versehen. Dieser ringförmige Schulteransatz 35 dient mit seiner zum Rückhalteelement 80 weisenden ringförmigen Stirnfläche 35' als Stütze für eine Dämpfungsfeder 36, die sich mit ihrem einen Ende an der ringförmigen Stirnfläche 35' und mit ihrem anderen Ende an der vorderen Stirnfläche des Rückhaltelements 80 abstützt. Die als Druckfeder ausgebildete Dämpfungsfeder 36 zwingt in Ihrer in Fig. 3 gezeigten Ruhestellung den Zuganker 32 nach vorne (in Fig. 3 nach links).

Auf der nach vorne, also zum ringförmigen Schulteransatz 35 weisenden Seite des Rückhaltelements 80 ist dieses, die Feder 36 umgebend, mit Anschlagelementen 84 für den ringförmigen Schulteransatz 35 versehen. Die Anschlagelemente 84 sind mittels elastischer Elemente 85, beispielsweise Druckfedern, die in Axialrichtung der Befestigungsvorrichtung 3 wirken, am Rückhalteelement 80 gelagert.

In der Befestigungsvorrichtung 3 ist weiterhin ein Auslösemechanismus 7 vorgesehen, der zeitverzögert die Trennung der trennbaren Einrichtung 8 und somit der Trennung des mit der Zugleine 4 verbundenen Zugankers 32 vom Befestigungskörper 30 auslöst wie weiter unten noch beschrieben wird.

Der Auslösemechanismus 7 umfasst eine Zeitverzögerungseinrichtung 70, die eine mechanische Uhr 72 aufweist. Die mechanische Uhr 72 kann über ein Stell- und Aufzugsrad 74 auf eine rückwärts zu zählende Zeit (countdown) voreingestellt werden. Das Rad 74 dient auch dazu, ein in der mechanischen Uhr 72 enthaltenes Federuhrwerk aufzuziehen. Die mechanische Uhr 72 weist weiterhin einen Auslösedrücker 76 auf, der von einer im Rückhalteelement 80 axialverschiebbar gelagerten Auslösestange 78 mechanisch beaufschlagbar ist. Die Auslösestange 78 liegt dazu mit ihrem rückwärtigen Ende am Auslösedrücker 76 an oder ist von diesem um einen minimalen Weg beabstandet. Das vordere Ende der Auslösestange 78 ist mit einem der axialverschiebbaren Anschlagelemente 84 verbunden.

Die Funktionsweise der Befestigungsvorrichtung 3 wird nachfolgend anhand der Fig. 4 beschrieben.

Wirkt auf die Zugleine 4 die vom Bremsfallschirm 2 ausgeübte Zugkraft F erstmalig ein, so wird der Zuganker aus seiner in Fig. 3 gezeigten Ruhestellung nach hinten in die in Fig. 4 gezeigte Auslösestellung bewegt. Bei dieser Bewegung gerät die ringförmige Schulter 35 in Anlage an die Anschlagelemente 84, verschiebt diese gegen die Kraft der elastischen Elemente 85 nach hinten (in Fig. 3 nach rechts) und stützt sich daran an dem mit dem Flugkörper 1 verbundenen Befestigungskörper ab, wobei die elastischen Elemente 85 in Axialrichtung komprimiert werden. Die Auslösestange 78 wird dabei ebenfalls in Axialrichtung nach hinten verschoben, trifft auf den Auslösedrücker 76 der mechanischen Uhr 72 auf und löst diesen aus. Das Uhrwerk der mechanischen Uhr 72 beginnt dadurch zu laufen. Nach Ablauf der voreingestellten countdown-Zeit t löst die mechanische Uhr 72 den Wärmeerzeugungsmechanismus des jeweiligen Wärmeerzeugungselements 82 aus, wie durch den Pfeil T in Fig. 4 symbolisiert ist. Die vom jeweiligen Wärmeerzeugungselement 82 erzeugte Wärme wirkt auf das jeweils diesem zugeordnete thermisch schmelzbare Befestigungselement 81 ein und lässt dieses schmelzen. Dadurch wird die Verbindung zwischen dem Rückhalteelement 80 und dem Befestigungskörper 30 gelöst. Die vom Zuganker 32 auf das Rückhalteelement 80 einwirkende Zugkraft F des Bremsfallschirms wird in der Folge nicht mehr von der Rückhalteeinrichtung 80 am Befestigungskörper 30 abgestützt, so dass sich der Zuganker 32 von dem mit dem Flugkörper verbundenen Befestigungskörper 30 trennt.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Flugkörper
- 2: Bremsfallschirm
- 3: Befestigungsvorrichtung
- 4: Zugleine
- 5: Verbindungsleine
- 6: Verbindungsleine
- 7: Auslösemechanismus
- 8: Einrichtung
- 30: Befestigungskörper
- 32: Zuganker
- 33: Öse
- 34: Schaft
- 35: Schulteransatz
- 35': ringförmige Schulter
- 36: Dämpfungsfeder
- 70: Zeitverzögerungseinrichtung
- 72: mechanische Uhr
- 74: Rad
- 76: Auslösedrücker
- 78: Auslösestange
- 80: Rückhalteelement
- 81: Befestigungselement
- 82: Wärmeerzeugungselement
- 84: Anschlagelemente
- 85: elastische Elemente

## Patentansprüche

1. Flugkörper mit zumindest einem Bremsfallschirm (2),
- wobei der Flugkörper (1; 1') mit mehreren Befestigungsvorrichtungen (3; 3', 3") für den Bremsfallschirm (2) versehen ist;
- wobei zwischen den Befestigungsvorrichtungen (3; 3', 3") und dem Bremsfallschirm (2) eine Zugleine (4) vorgesehen ist;
- wobei die Befestigungsvorrichtungen (3; 3', 3") derart am Flugkörper (1; 1') angebracht sind, dass eine im entfalteten Zustand des von Luft angeströmten Bremsfallschirms (2) von der Zugleine (4) gebildete gerade Linie in ihrer gedachten Verlängerung (G) durch den Schwerpunkt (S) des Flugkörpers (1; 1') verläuft, und
- wobei die Zugleine (4) an ihrem zum Flugkörper (1') weisenden vorderen Ende mit einer Mehrzahl von Verbindungsleinen (5, 6) versehen ist, die jeweils zu einer Befestigungsvorrichtung (3', 3") führen;
**dadurch gekennzeichnet,**
- **dass** die Befestigungsvorrichtungen (3; 3', 3") einen jeweiligen Auslösemechanismus (7) zum zeitsynchronen Trennen der mechanischen Verbindungen zwischen dem Flugkörper (1; 1') und dem Bremsfallschirm (2) aufweisen.

2. Flugkörper mit zumindest einem Bremsfallschirm (2) nach Anspruch 1,
**dadurch gekennzeichnet,**
**dass** die jeweilige Befestigungsvorrichtung (3; 3', 3") einen mit dem Flugkörper (1; 1') verbindbaren Befestigungskörper (30) sowie einen im Befestigungskörper (30) gehalterten und mit der Zugleine (4) verbundenen Zuganker (32) aufweist.

3. Flugkörper mit zumindest einem Bremsfallschirm (2) nach Anspruch 2,
**dadurch gekennzeichnet,**
**dass** der Zuganker (32) im Befestigungskörper (30) mittels einer trennbaren Einrichtung (8) gehaltert ist.

4. Flugkörper mit zumindest einem Bremsfallschirm (2) nach Anspruch 3,
**dadurch gekennzeichnet,**
**dass** die trennbare Einrichtung (8) zumindest ein thermisch schmelzbares Befestigungselement (81) sowie ein Wärmeerzeugungselement (82) aufweist.

5. Flugkörper mit zumindest einem Bremsfallschirm (2) nach Anspruch 3,
**dadurch gekennzeichnet,**
**dass** die trennbare Einrichtung (8) zumindest ein mechanisch zerstörbares Befestigungselement sowie ein Zerstörungselement für dieses Befestigungselement aufweist.

6. Flugkörper mit zumindest einem Bremsfallschirm (2) nach einem der Ansprüche 3 bis 5 ,
**dadurch gekennzeichnet,**
**dass** der Auslösemechanismus (7) eine Zeitverzögerungseinrichtung (70) aufweist, die von der auf den Zuganker (32) einwirkenden Zugkraft (F) ausgelöst wird und die ihrerseits zeitverzögert die Trennung der trennbaren Einrichtung (8) auslöst.

7. Flugkörper mit zumindest einem Bremsfallschirm (2) nach Anspruch 6,
**dadurch gekennzeichnet,**
**dass** die Zeitverzögerungseinrichtung (70) eine vorzugsweise mechanische Uhr (72) aufweist.

8. Flugkörper mit zumindest einem Bremsfallschirm (2) nach einen der vorhergehenden Ansprüche,
**dadurch gekennzeichnet,**
**dass** eine Mehrzahl von Bremsfallschirmen (2) vorgesehen ist, die jeweils mit dem vom Flugkörper wegweisenden hinteren Ende der Zugleine (4) verbunden sind.

## Claims

1. Flying object comprising at least one brake parachute (2),
- wherein the flying object (1; 1') is provided with a plurality of fixing devices (3; 3', 3") for the brake parachute (2);
- wherein a dragline (4) is provided between the fixing devices (3; 3', 3") and the brake parachute (2) ;
- wherein the fixing devices (3; 3', 3") are mounted on the flying object (1; 1') in such a way that the imaginary extension (G) of a straight line formed by the dragline (4) in the deployed state of the air-impinged brake parachute (2) runs through the centre of gravity (S) of the flying object (1; 1'), and
- wherein the dragline (4) is provided at its front end directed towards the flying object (1') with a plurality of connecting lines (5, 6) which in each case lead to a fixing device (3', 3");
**characterized in that**
- the fixing devices (3; 3', 3") have a respective triggering mechanism (7) for synchronous separation of the mechanical connections between the flying object (1; 1') and the brake parachute (2).

2. Flying object comprising at least one brake parachute (2) according to Claim 1, **characterized in that** the respective fixing device (3; 3', 3") has a fixing body (30), which can be connected to the flying object (1; 1'), and a tie rod (32) held in the fixing body (30) and connected to the dragline (4).

3. Flying object comprising at least one brake parachute (2) according to Claim 2, **characterized in that** the tie rod (32) is held in the fixing body (30) by means of a separable device (8).

4. Flying object comprising at least one brake parachute (2) according to Claim 3, **characterized in that** the separable device (8) has at least one thermally meltable fixing element (81) and a heat-generating element (82).

5. Flying object comprising at least one brake parachute (2) according to Claim 3, **characterized in that** the separable device (8) has at least one mechanically destructible fixing element and a destruction element for this fixing element.

6. Flying object comprising at least one brake parachute (2) according to one of Claims 3 to 5, **characterized in that** the triggering mechanism (7) has a time delay device (70) which is triggered by the pulling force (F) acting on the tie rod (32) and which in turn triggers the separation of the separable device (8) with a time delay.

7. Flying object comprising at least one brake parachute (2) according to Claim 6, **characterized in that** the time delay device (70) has a preferably mechanical clock (72).

8. Flying object comprising at least one brake parachute (2) according to one of the preceding claims, **characterized in that** a plurality of brake parachutes (2) are provided which are in each case connected to the rear end of the dragline (4) that is directed away from the flying object.

## Revendications

1. Missile comprenant au moins un parachute stabilisateur (2),
- le missile (1 ; 1') étant muni de plusieurs dispositifs de fixation (3 ; 3', 3") pour le parachute stabilisateur (2) ;
- un câble de traction (4) étant prévu entre les dispositifs de fixation (3 ; 3', 3") et le parachute stabilisateur (2) ;
- les dispositifs de fixation (3 ; 3', 3") étant montés sur le missile (1 ; 1') de telle sorte qu'une ligne droite formée par le câble de traction (4) dans l'état déployé du parachute stabilisateur (2) attaqué par l'air s'étende dans son prolongement imaginaire (G) à travers le centre de gravité (S) du missile (1 ; 1'), et
- le câble de traction (4) étant muni, au niveau de son extrémité avant tournée vers le missile (1'), d'une pluralité de câbles de liaison (5, 6) qui conduisent chacun à un dispositif de fixation (3', 3") ;
**caractérisé en ce que**
- les dispositifs de fixation (3 ; 3', 3") présentent un mécanisme de déclenchement respectif (7) pour la séparation synchronisée des liaisons mécaniques entre le missile (1 ; 1') et le parachute stabilisateur (2).

2. Missile comprenant au moins un parachute stabilisateur (2) selon la revendication 1,
**caractérisé en ce que**
le dispositif de fixation respectif (3 ; 3', 3") présente un corps de fixation (30) pouvant être connecté au missile (1 ; 1') ainsi qu'un tirant d'ancrage (32) retenu dans le corps de fixation (30) et connecté au câble de traction (4).

3. Missile comprenant au moins un parachute stabilisateur (2) selon la revendication 2,
**caractérisé en ce que**
le tirant d'ancrage (32) est retenu dans le corps de fixation (30) au moyen d'un dispositif séparable (8).

4. Missile comprenant au moins un parachute stabilisateur (2) selon la revendication 3,
**caractérisé en ce que**
le dispositif séparable (8) présente au moins un élément de fixation fusible thermiquement (81) ainsi qu'un élément générateur de chaleur (82).

5. Missile comprenant au moins un parachute stabilisateur (2) selon la revendication 3,
**caractérisé en ce que**
le dispositif séparable (8) présente au moins un élément de fixation pouvant être détruit mécaniquement ainsi qu'un élément de destruction pour cet élément de fixation.

6. Missile comprenant au moins un parachute stabilisateur (2) selon l'une quelconque des revendications 3 à 5,
**caractérisé en ce que**
le mécanisme de déclenchement (7) présente un dispositif de retardement (70) qui est déclenché par la force de traction (F) agissant sur le tirant d'ancrage (32) et qui, de son côté, déclenche avec retardement la séparation du dispositif séparable (8).

7. Missile comprenant au moins un parachute stabilisateur (2) selon la revendication 6,
**caractérisé en ce que**
le dispositif de retardement (70) présente une horloge de préférence mécanique (72).

8. Missile comprenant au moins un parachute stabilisateur (2) selon l'une quelconque des revendications précédentes,
**caractérisé en ce**
**qu'**une pluralité de parachutes stabilisateurs (2) est prévue, lesquels parachutes stabilisateurs sont chacun connectés à l'extrémité arrière du câble de traction (4) située à l'opposé du missile.
